# FASCICULE DE BREVET EUROPEEN

(11) **EP 2 697 088 B1**
(45) Date de publication et mention de la délivrance du brevet: **12.08.2015**
(21) Numéro de dépôt: 12708350.9
(22) Date de dépôt: 14.03.2012
(51) Int. Cl.: B60K 11/08

(54) **DISPOSITIF DE GUIDAGE D'AIR POUR LA PARTIE AVANT D'UN VEHICULE AUTOMOBILE**
VORRICHTUNG ZUR LUFTLEITUNG FÜR DIE FRONTPARTIE EINES KRAFTFAHRZEUGS
DEVICE FOR GUIDING AIR FOR THE FRONT PORTION OF A MOTOR VEHICLE

(30) Priorité: 15.04.2011 FR 1153294
(43) Date de publication de la demande: 19.02.2014
(73) Titulaire: Renault S.A.S., 92100 Boulogne-Billancourt (FR)
(72) Inventeur: DO NASCIMENTO, Silvino, F-78390 Bois D'arcy (FR); PEROT, Patrick, F-78960 Voisins le Bretonneux (FR)
(86) Numéro de dépôt international: PCT/EP2012/054478
(87) Numéro de publication internationale: WO 2012/139848

(56) Documents cités:
- DE-A1-102008 039 806
- DE-B3-102005 051 659
- FR-A1- 2 804 638

## Description

L'invention concerne la structure d'une partie avant d'un véhicule automobile. Elle concerne plus particulièrement un dispositif de guidage d'air d'une telle structure, adapté pour guider l'air jusqu'à un radiateur. Elle concerne aussi un agencement de la partie avant d'un véhicule automobile et un véhicule automobile en tant que tel équipé d'un tel agencement. Enfin, elle concerne un procédé de fabrication d'un tel véhicule automobile.

La partie avant d'un véhicule automobile doit répondre à plusieurs exigences. D'abord, elle doit permettre de récupérer un flux d'air maximal pour participer à une fonction de refroidissement au sein d'un ou plusieurs radiateurs. Ensuite, elle doit permettre de traiter différents types de chocs dont les petits chocs dits « piétons », qui génèrent peu d'énergie à absorber.

Le document DE 10 2008 0 39 806 décrit un dispositif selon le préambule de la revendication 1.

Pour répondre à ces différentes exigences, un premier document, FR2553826, propose une première solution de structure avant d'un véhicule automobile comprenant deux radiateurs superposés dans une direction verticale, comprenant chacun leur dispositif de guidage d'air. Le dispositif de guidage d'air inférieur se présente dans une résine synthétique fixée d'une part à la partie frontale du véhicule et d'autre part sur le radiateur, en partie sur sa face avant perpendiculaire à la direction longitudinale. Cette fixation sur le radiateur présente les inconvénients d'être difficile à réaliser au montage du véhicule du fait de l'accessibilité réduite de la zone de fixation et de ne pas permettre de rattraper les dispersions de positionnement du radiateur et autres pièces de la structure avant du véhicule. De plus, ce dispositif de guidage d'air ajoute une résistance en cas de choc « piétons », qui ne permet pas de mesurer et garantir rigoureusement le respect des comportements normalisés lors de tels chocs et risque d'endommager le radiateur lors de tels chocs.

Un second document, EP0786367, décrit de même un dispositif de guidage d'air pour la partie avant d'un véhicule automobile, qui se fixe sur le radiateur par différentes vis, et présente une extrémité avant libre positionnée dans une liaison en U. Cette solution présente sensiblement les mêmes inconvénients que la précédente. Notamment, le radiateur risque d'être endommagé par le dispositif de guidage d'air en cas de choc frontal.

Il existe donc un besoin d'un agencement amélioré de la partie avant d'un véhicule automobile, permettant d'aboutir à un guidage d'air optimal vers un radiateur tout en respectant les contraintes de choc piéton.

D'autre part, un objet supplémentaire de l'invention est de proposer une solution peu onéreuse et au montage facile.

A cet effet, l'invention repose sur un dispositif de guidage d'air, formant une surface étanche apte à s'étendre depuis une surface frontale d'un véhicule automobile jusqu'à un radiateur positionné dans la partie avant du véhicule automobile, le dispositif comprenant une première partie destinée à guider l'air vers le radiateur et une lèvre articulée sur cette première partie comprenant une extrémité libre, apte à venir en appui sur le radiateur, la lèvre s'étendant vers l'avant depuis sa zone de liaison avec la première partie, son extrémité libre se trouvant donc plus avancée que la zone de liaison.

La zone de liaison du dispositif peut comprendre une propriété élastique remplissant une fonction de rappel de la lèvre.

Le dispositif de guidage d'air peut se présenter sous une forme monolithique en matériau plastique.

La zone de liaison peut se présenter comme une zone de faible épaisseur de matériau plastique pour atteindre une propriété de déformation élastique.

La lèvre peut être sensiblement plane et articulée vers son extrémité arrière, au niveau de la zone de liaison positionnée vers l'extrémité arrière de la première partie.

Le dispositif de guidage d'air peut comprendre une autre lèvre vers son extrémité avant.

L'invention porte aussi sur un agencement de la partie avant d'un véhicule automobile, comprenant une surface frontale comprenant au moins une ouverture d'entrée d'air, des dispositifs de traitement des chocs frontaux, et un radiateur disposé à proximité en arrière de cette surface frontale, caractérisé en ce qu'il comprend un dispositif de guidage d'air tel que décrit précédemment disposé entre la surface frontale du véhicule automobile et le radiateur pour assurer un guidage étanche de l'air depuis la surface frontale du véhicule automobile jusqu'au radiateur.

La lèvre articulée du dispositif de guidage d'air peut comprendre une partie en appui sur une surface latérale entourant le radiateur.

La lèvre peut posséder une mobilité dans une direction longitudinale (x) autour du radiateur.

L'agencement de la partie avant d'un véhicule automobile peut comprendre au moins une ouverture d'entrée d'air inférieure et au moins une ouverture d'entrée d'air supérieure, réparties autour d'une traverse, au niveau de la surface frontale du véhicule automobile.

Le dispositif de guidage peut comprendre une extrémité avant libre.

Le dispositif de guidage d'air peut s'étendre sur tout le pourtour des ouvertures d'entrée d'air et de l'ensemble formé par un ou plusieurs radiateur(s), délimitant ainsi un volume fermé et étanche entre la surface frontale du véhicule automobile et le ou les radiateur(s).

L'invention porte aussi sur un véhicule automobile caractérisé en ce qu'il comprend un agencement de sa partie avant tel que défini précédemment.

L'invention porte aussi sur un procédé de montage de la partie avant d'un véhicule automobile, comprenant une étape de montage d'au moins un radiateur dans la partie avant d'un véhicule automobile, caractérisé en ce qu'il comprend ensuite une étape de fixation d'un dispositif de guidage d'air tel que défini précédemment par un mouvement de l'avant vers l'arrière, entraînant l'articulation naturelle des lèvres au contact d'une surface latérale d'un radiateur, pour obtenir l'étanchéité du guidage d'air depuis la surface frontale du véhicule jusqu'à un ou plusieurs radiateurs.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente une vue de face de la surface frontale d'un véhicule automobile selon un mode de réalisation de l'invention.
La figure 2 représente une vue en perspective arrière de la partie avant d'un véhicule automobile selon le mode de réalisation de l'invention.
La figure 3 représente une vue arrière de la partie avant d'un véhicule automobile de la figure 2 dans laquelle les radiateurs sont supprimés.
La figure 4 représente une vue de dessus d'une coupe selon un plan horizontal de la partie avant d'un véhicule automobile selon le mode de réalisation de l'invention.
La figure 5 représente une vue de côté d'une coupe selon un plan vertical de la partie avant d'un véhicule automobile selon le mode de réalisation de l'invention.
La figure 6 représente une vue schématique d'une partie d'un dispositif de guidage d'air selon le mode de réalisation de l'invention.

Dans tout le document, nous entendons par direction longitudinale x la direction horizontale orientée de l'arrière vers l'avant du véhicule automobile, par direction transversale y une direction horizontale et perpendiculaire à la direction longitudinale et par direction verticale z la direction perpendiculaire aux deux précédentes et orientée vers le haut.

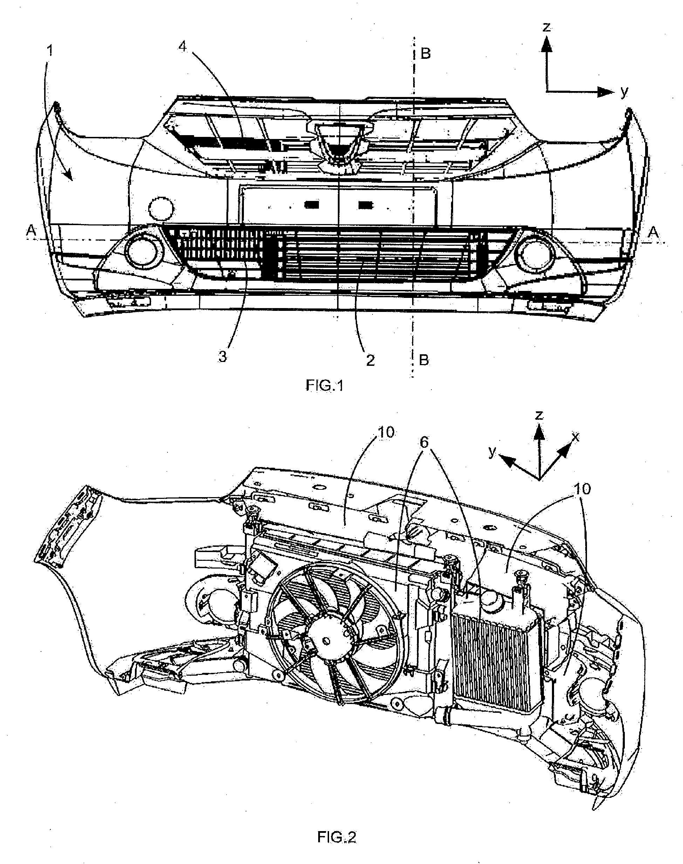

La figure 1 représente la surface frontale 1 d'un véhicule automobile, sur laquelle on voit notamment un bouclier frontal dans lequel sont aménagées différentes ouvertures 2, 3, 4 formant des entrées d'air pour remplir des fonctions thermiques de refroidissement, pour le moteur et/ou l'habitacle par exemple, en coopération avec au moins un radiateur disposé à proximité derrière le bouclier, comme cela est visible sur les figures suivantes.

Au sein de la partie avant du véhicule automobile sont disposés d'autres éléments, notamment pour le traitement des chocs, comme cela a été rappelé précédemment. Pour cela, une traverse 5 s'étend sur toute la largeur du véhicule au niveau de sa surface frontale 1, entre les ouvertures inférieures 2, 3 et supérieure 4 mentionnées ci-dessus. Cette traverse 5 participe à la gestion des chocs frontaux du véhicule automobile, en coopération notamment avec des longerons latéraux, non représentés, qui s'étendent dans la direction sensiblement longitudinale du véhicule. Cette partie avant d'un véhicule automobile intègre aussi d'autres fonctions comme l'éclairage, etc.

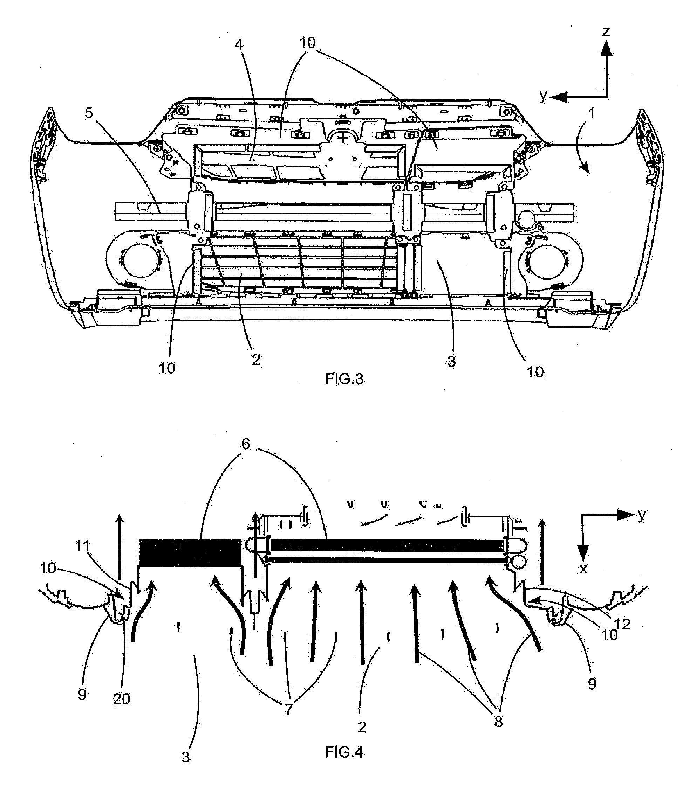

La figure 2 représente la partie avant d'un véhicule automobile, vue par sa face arrière cachée, depuis l'intérieur du véhicule. Elle permet de visualiser plusieurs radiateurs 6 positionnés à proximité des ouvertures d'entrée d'air. La figure 3 représente une telle vue sans les radiateurs. Elle permet de visualiser deux ouvertures d'entrée d'air 2, 3 juxtaposées dans la partie inférieure de la surface frontale du véhicule automobile, s'étendant globalement sur une partie significative de sa largeur. Cette surface frontale comprend de plus une troisième ouverture d'entrée d'air 4 située dans une partie plus haute. Ces différentes ouvertures d'entrées d'air 2, 3, 4 comprennent des ailettes 7 d'orientation d'un flux d'air dans une direction choisie et éventuellement une grille, de manière connue.

Selon le mode de réalisation de l'invention, la partie avant du véhicule automobile comprend de plus un dispositif de guidage d'air 10 qui sert d'intermédiaire entre les différentes ouvertures d'entrée d'air 2, 3, 4 de la surface frontale du véhicule et les radiateurs 6 du véhicule automobile. Sa fonction consiste à guider l'air entrant par les ouvertures jusqu'aux radiateurs, tout en évitant que l'air ne s'échappe sans traverser ces radiateurs 6, afin de garantir le meilleur rendement thermique possible. Pour cela, le dispositif de guidage d'air 10 s'étend sur tout le pourtour de l'ensemble défini par les entrées d'air et les radiateurs, notamment dans les deux directions principales verticale z et transversale y, pour former un volume intermédiaire fermé et étanche de conduite d'air, garantissant ainsi inévitablement un transfert thermique au niveau du ou des radiateur(s) à partir de l'intégralité du flux d'air entrant par la surface frontale 1 du véhicule automobile. La géométrie des ouvertures d'entrée d'air 2, 3, 4 et la forme, le nombre et la répartition des radiateurs tels qu'illustrés représentent un simple exemple. Le concept de guidage d'air, qui va être détaillé par la suite, peut être implémenté avec toute autre géométrie de la partie avant d'un véhicule automobile.

La figure 4 représente plus précisément la partie avant 1 du véhicule automobile en vue de dessus en coupe par un plan horizontal A-A, au niveau de la partie inférieure du véhicule automobile. On distingue les deux ouvertures d'entrées d'air 2, 3 inférieures par lesquelles pénètre un flux d'air 8. Autour de ces ouvertures, des éléments 9 sont prévus au niveau de la surface frontale du véhicule automobile pour participer aux situations de chocs piéton. Sur les deux extrémités latérales des flux d'air 8, le dispositif de guidage d'air 10 comprend deux parois 11, 12 sensiblement verticales, qui relient la surface frontale du véhicule aux radiateurs 6, de manière à créer une étanchéité totale du guidage d'air afin d'éviter toute fuite d'air hors des radiateurs 6.

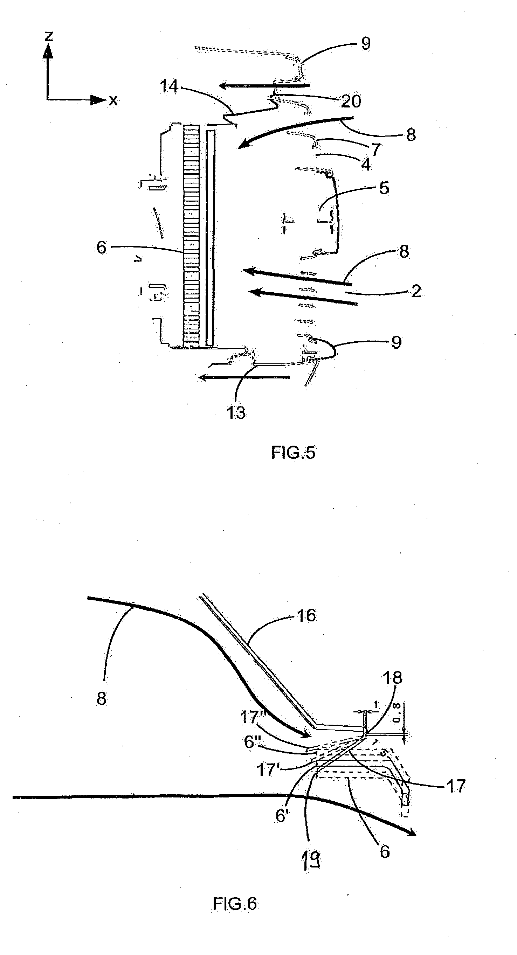

La figure 5 représente une vue de côté d'une coupe B-B selon un plan longitudinal et vertical de la partie avant 1 du véhicule automobile. La surface frontale du véhicule comprend de bas en haut un premier élément 9 de traitement des chocs piéton, l'ouverture d'entrée d'air 2 inférieure, la traverse 5, l'ouverture d'entrée d'air 4 supérieure, et un second élément 9 de traitement des chocs piéton. Un radiateur 6 s'étend parallèlement sur presque toute la hauteur de cette surface avant du véhicule automobile. Le dispositif de guidage d'air 10 comprend deux surfaces inférieure 13 et supérieure 14, disposées entre d'une part la partie frontale du véhicule automobile et d'autre part une surface latérale du radiateur 6. Ce dispositif de guidage d'air 10 assure ainsi l'étanchéité autour du radiateur 6, évitant toute fuite d'air par le bas ou le haut.

La figure 6 représente plus précisément le dispositif de guidage d'air, notamment dans sa zone de liaison avec un radiateur 6. Ce dispositif de guidage d'air comprend principalement deux parties, une première partie 16 inclinée convergeant vers le radiateur, pour former une sorte d'entonnoir depuis les ouvertures d'entrée d'air jusqu'au radiateur, et une seconde partie formant une lèvre 17 sensiblement plane, articulée en une zone de liaison 18 à la première partie 16. Cette zone de liaison 18 se présente à l'extrémité arrière du dispositif de guidage d'air 10, de sorte que la lèvre 17 s'étend vers l'avant. En position de repos, la lèvre 17 occupe de préférence une configuration plus écartée de la première partie 16 que lors de son utilisation : son positionnement en coopération avec un radiateur induit son déplacement et son rapprochement de la première partie 16. Son extrémité libre 19 vient alors en appui sur une surface latérale solidaire du radiateur 6, formé ici par une pièce plane s'étendant vers l'avant, et se trouvant sensiblement dans un plan longitudinal et vertical ou transversal (xz ou xy). Cette géométrie du dispositif de guidage d'air 10 est avantageusement reproduite sur tout ou partie des surfaces latérales entourant le radiateur 6, de sorte d'empêcher toute fuite d'air, soit sur les côtés, soit au-dessous, soit au-dessus des radiateurs.

Cette géométrie du dispositif de guidage 10 présente les avantages suivants :
- la lèvre 17 est contrainte en appui sur la surface extérieure du radiateur 6 par un effort de rappel élastique exercé par le dispositif de guidage d'air 10, ce qui garantit un bon contact sur le radiateur empêchant tout passage d'air entre la lèvre et le radiateur. En remarque, le flux d'air 8 provenant de la surface frontale du véhicule vient en butée sur la surface avant de la lèvre 17 et tend à la plaquer sur le radiateur, renforçant ainsi encore l'étanchéité de la solution ;
- l'extrémité 19 de la lèvre 17 vient en simple appui libre sur la surface extérieure du radiateur, sensiblement perpendiculaires aux directions transversale y et/ou verticale z. Par ce biais, en cas de choc frontal du véhicule, la poussée induite sur le dispositif de guidage 10 entraîne le déplacement de l'extrémité 19 de la lèvre 17 dans la direction longitudinale x en frottement sur cette surface extérieure du radiateur, jusqu'à éventuellement dépasser le radiateur vers l'arrière, sans exercer de contrainte sur ce dernier et évitant ainsi sa détérioration lors d'un choc. En remarque, cet avantage ne serait pas atteint si le dispositif de guidage venait en contact avec la surface antérieure du radiateur, orientée vers l'avant du véhicule. Cela permet de plus au dispositif de guidage 10 de n'opposer aucune résistance à la déformation de la structure avant du véhicule automobile lors d'un choc et de maîtriser parfaitement le comportement du véhicule lors du choc ;
- le degré de liberté de la lèvre 17 lui permet de plus de remplir une fonction de rattrapage des jeux, de compenser les dispersions lors du montage de la structure avant du véhicule automobile et d'atteindre avec fiabilité une configuration finale étanche. Pour illustrer cet avantage, la figure 6 illustre deux positions alternatives du radiateur 6', 6" relativement au dispositif de guidage d'air 10 et les différentes positions respectives occupées par la lèvre 17', 17" dans ces deux configurations, qui illustrent les dispersions obtenues lors du montage de cette partie avant du véhicule automobile. Il apparaît bien que l'étanchéité reste assurée dans les trois configurations.

De manière avantageuse, le dispositif de guidage d'air se présente en une seule pièce monolithique, obtenue par un moulage d'un matériau plastique, comme du polypropylène. La lèvre 17 est alors articulée par une zone de liaison 18 de faible épaisseur permettant par sa souplesse de former une articulation. Plus précisément, la zone de liaison 18 et d'articulation de la lèvre 17 par rapport à la première partie 16 se présente dans ce mode de réalisation sous la forme d'une troisième partie de petite dimension, de longueur inférieure au millimètre et de faible épaisseur, sensiblement perpendiculaire à la première partie 16, pour permettre son pliage élastique sous un effort appliqué sur la lèvre 17. Cette dernière obtient par ce biais une mobilité qui s'apparente à une rotation autour d'un axe. Nous entendons donc par articulation toute mobilité de la lèvre. Enfin, cette lèvre 17 présente elle-même une épaisseur plus petite que celle de la première partie 16 et une souplesse plus importante.

En complément, l'extrémité avant 20 du dispositif de guidage d'air 10, visible sur les figures 4 et 5, opposée au radiateur 6, peut aussi présenter une liaison mobile et libre, par une autre lèvre ou non, pour amplifier les avantages listés précédemment.

En variante, le dispositif de guidage d'air peut être construit en plusieurs pièces distinctes assemblées, dont une lèvre articulée par un axe distinct ou mobile par toute autre liaison, non nécessairement une rotation.

Enfin, l'invention porte aussi sur un procédé de montage de la partie antérieure d'un véhicule automobile, qui comprend les étapes suivantes :
- montage d'au moins un radiateur en partie antérieure d'un véhicule automobile, par exemple par une translation verticale par le bas du véhicule automobile ;
- fixation d'un dispositif de guidage d'air par un mouvement de l'avant vers l'arrière, entraînant le pliage naturel des lèvres 17 en contact sur une surface extérieure et latérale du radiateur, pour obtenir l'étanchéité du dispositif, sans nécessité de fixation complexe.

## Revendications

1. Dispositif de guidage d'air (10), formant une surface étanche apte à s'étendre depuis une surface frontale (1) d'un véhicule automobile jusqu'à un radiateur positionné dans la partie avant du véhicule automobile, le dispositif comprenant une première partie (16) destinée à guider l'air vers le radiateur et une lèvre (17) articulée sur cette première partie (16) comprenant une extrémité libre (19) apte à venir en appui sur le radiateur (6), **caractérisé en ce que** la lèvre (17) s'étend vers l'avant depuis sa zone de liaison (18) avec la première partie (16), son extrémité libre (19) se trouvant donc plus avancée que la zone de liaison (18).

2. Dispositif de guidage d'air (10) selon la revendication 1, **caractérisé en ce que** la zone de liaison (18) du dispositif comprend une propriété élastique remplissant une fonction de rappel de la lèvre (17).

3. Dispositif de guidage d'air (10) selon la revendication 1 ou 2, **caractérisé en ce qu'**il se présente sous une forme monolithique en matériau plastique.

4. Dispositif de guidage d'air (10) selon la revendication précédente, **caractérisé en ce que** la zone de liaison (18) se présente comme une zone de faible épaisseur de matériau plastique pour atteindre une propriété de déformation élastique.

5. Dispositif de guidage d'air (10) selon l'une des revendications précédentes, **caractérisé en ce que** la lèvre (17) est sensiblement plane et articulée vers son extrémité arrière, au niveau de la zone de liaison (18) positionnée vers l'extrémité arrière de la première partie (16).

6. Dispositif de guidage d'air (10) selon l'une des revendications précédentes, **caractérisé en ce qu'**il comprend une autre lèvre vers son extrémité avant.

7. Agencement de la partie avant d'un véhicule automobile, comprenant une surface frontale comprenant au moins une ouverture d'entrée d'air (2 ; 3 ; 4), des dispositifs de traitement des chocs frontaux (5, 9), et un radiateur (6) disposé à proximité en arrière de cette surface frontale, **caractérisé en ce qu'**il comprend un dispositif de guidage d'air (10) selon l'une des revendications précédentes disposé entre la surface frontale (1) du véhicule automobile et le radiateur (6) pour assurer un guidage étanche de l'air depuis la surface frontale (1) du véhicule automobile jusqu'au radiateur (6).

8. Agencement de la partie avant d'un véhicule automobile selon la revendication précédente, **caractérisé en ce que** la lèvre (17) articulée du dispositif de guidage d'air (10) comprend une partie en appui sur une surface latérale entourant le radiateur.

9. Agencement de la partie avant d'un véhicule automobile selon la revendication précédente, **caractérisé en ce que** la lèvre (17) possède une mobilité dans une direction longitudinale (x) autour du radiateur (6).

10. Agencement de la partie avant d'un véhicule automobile selon l'une des revendications 7 à 9, **caractérisé en ce qu'**il comprend au moins une ouverture d'entrée d'air (2 ; 3) inférieure et au moins une ouverture d'entrée d'air (4) supérieure, réparties autour d'une traverse (5), au niveau de la surface frontale (1) du véhicule automobile.

11. Agencement de la partie avant d'un véhicule automobile selon l'une des revendications 7 à 10, **caractérisé en ce que** le dispositif de guidage (10) comprend une extrémité avant (20) libre.

12. Agencement de la partie avant d'un véhicule automobile selon l'une des revendications 7 à 11, **caractérisé en ce que** le dispositif de guidage d'air (10) s'étend sur tout le pourtour des ouvertures d'entrée d'air (2, 3, 4) et de l'ensemble formé par un ou plusieurs radiateur(s), délimitant ainsi un volume fermé et étanche entre la surface frontale du véhicule automobile et le ou les radiateur(s).

13. Véhicule automobile **caractérisé en ce qu'**il comprend un agencement de sa partie avant selon l'une des revendications 7 à 12.

14. Procédé de montage de la partie avant d'un véhicule automobile, comprenant une étape de montage d'au moins un radiateur (6) dans la partie avant d'un véhicule automobile, **caractérisé en ce qu'**il comprend ensuite une étape de fixation d'un dispositif de guidage d'air (10) selon l'une des revendications 1 à 6 par un mouvement de l'avant vers l'arrière, entraînant l'articulation naturelle des lèvres (17) au contact d'une surface latérale d'un radiateur (6), pour obtenir l'étanchéité du guidage d'air depuis la surface frontale (1) du véhicule jusqu'à un ou plusieurs radiateurs (6).

## Patentansprüche

1. Vorrichtung zur Luftleitung (10), die eine dichte Fläche bildet, die geeignet ist, sich von der Frontfläche (1) eines Kraftfahrzeugs bis zu einem im vorderen Teil des Kraftfahrzeugs positionierten Kühler zu erstrecken, wobei die Vorrichtung einen ersten Teil (16), der dazu bestimmt ist, die Luft zu dem Kühler zu leiten, und eine Lippe (17) umfasst, die auf diesem ersten Teil (16) angelenkt ist, umfassend ein freies Ende (19), das geeignet ist, auf dem Kühler (6) zur Anlage zu gelangen, **dadurch gekennzeichnet, dass** sich die Lippe (17) nach vorne von ihrer Verbindungszone (18) mit dem ersten Teil (16) erstreckt, wobei sich ihr freies Ende (19) somit weiter vorne als die Verbindungszone (18) befindet.

2. Vorrichtung zur Luftleitung (10) nach Anspruch 1, **dadurch gekennzeichnet, dass** die Verbindungszone (18) der Vorrichtung eine elastische Eigenschaft aufweist, die eine Funktion der Rückstellung der Lippe (17) erfüllt.

3. Vorrichtung zur Luftleitung (10) nach Anspruch 1 oder 2, **dadurch gekennzeichnet, dass** sie in einer monolithischen Form aus Kunststoff vorhanden ist.

4. Vorrichtung zur Luftleitung (10) nach dem vorhergehenden Anspruch, **dadurch gekennzeichnet, dass** die Verbindungszone (18) als eine Zone von geringer Dicke aus Kunststoff vorhanden ist, um eine elastische Verformungseigenschaft zu erzielen.

5. Vorrichtung zur Luftleitung (10) nach einem der vorhergehenden Ansprüche, **dadurch gekennzeichnet, dass** die Lippe (17) im Wesentlichen flach und zu ihrem hinteren Ende hin gelenkig, im Bereich der Verbindungszone (18) zum hinteren Ende des ersten Teils (16) hin positioniert ist.

6. Vorrichtung zur Luftleitung (10) nach einem der vorhergehenden Ansprüche, **dadurch gekennzeichnet, dass** sie eine weitere Lippe zu ihrem vorderen Ende hin umfasst.

7. Anordnung des vorderen Teils eines Kraftfahrzeugs, umfassend eine Frontfläche, umfassend mindestens eine Lufteintrittsöffnung (2; 3; 4), Vorrichtungen zur Verarbeitung der Stöße von vorne (5, 9) und einen Kühler (6), der in der Nähe hinten auf dieser Frontfläche angeordnet ist, **dadurch gekennzeichnet, dass** sie eine Vorrichtung zur Luftleitung (10) nach einem der vorhergehenden Ansprüche umfasst, die zwischen der Frontfläche (1) des Kraftfahrzeugs und dem Kühler (6) angeordnet ist, um eine dichte Leitung der Luft von der Frontfläche (1) des Kraftfahrzeugs zum Kühler (6) zu gewährleisten.

8. Anordnung des vorderen Teils eines Kraftfahrzeugs nach dem vorhergehenden Anspruch, **dadurch gekennzeichnet, dass** die gelenkige Lippe (17) der Vorrichtung zur Luftleitung (10) einen Teil umfasst, der auf einer den Kühler umgebenden Seitenfläche aufliegt.

9. Anordnung des vorderen Teils eines Kraftfahrzeugs nach dem vorhergehenden Anspruch, **dadurch gekennzeichnet, dass** die Lippe (17) eine Beweglichkeit in eine Längsrichtung (x) um den Kühler (6) besitzt.

10. Anordnung des vorderen Teils eines Kraftfahrzeugs nach einem der Ansprüche 7 bis 9, **dadurch gekennzeichnet, dass** sie mindestens eine untere Lufteintrittsöffnung (2; 3) und mindestens eine obere Lufteintrittsöffnung (4) umfasst, die um eine Querstrebe (5) im Bereich der Frontfläche (1) des Kraftfahrzeugs verteilt sind.

11. Anordnung des vorderen Teils eines Kraftfahrzeugs nach einem der Ansprüche 7 bis 10, **dadurch gekennzeichnet, dass** die Führungsvorrichtung (10) ein freies vorderes Ende (20) umfasst.

12. Anordnung des vorderen Teils eines Kraftfahrzeugs nach einem der Ansprüche 7 bis 11, **dadurch gekennzeichnet, dass** sich die Vorrichtung zur Luftleitung (10) über den gesamten Umfang der Lufteintrittsöffnungen (2, 3, 4) und der von einem oder mehreren Kühler(n) gebildeten Einheit erstreckt, wodurch ein geschlossenes und dichtes Volumen zwischen der Frontfläche des Kraftfahrzeugs und dem oder den Kühler(n) begrenzt wird.

13. Kraftfahrzeug, **dadurch gekennzeichnet, dass** es eine Anordnung seines vorderen Teils nach einem der Ansprüche 7 bis 12 umfasst.

14. Verfahren zur Montage des vorderen Teils eines Kraftfahrzeugs, umfassend einen Schritt der Montage mindestens eines Kühlers (6) im vorderen Teil eines Kraftfahrzeugs, **dadurch gekennzeichnet, dass** es anschließend einen Schritt der Befestigung einer Vorrichtung zur Luftleitung (10) nach einem der Ansprüche 1 bis 6 durch eine Bewegung von vorne nach hinten umfasst, wobei das natürliche Gelenk der Lippen (17) mit einer Seitenfläche eines Kühlers (6) in Kontakt gebracht wird, um die Dichtigkeit der Luftleitung von der Frontfläche (1) des Fahrzeugs bis zu einem oder mehreren Kühlern (6) zu erzielen.

## Claims

1. Air guide device (10) forming a fluid tight surface able to extend from a frontal surface (1) of a motor vehicle as far as a radiator positioned in the front part of the motor vehicle, the device comprising a first part (16) intended to guide the air toward the radiator and a lip (17) articulated to this first part (16) and comprising a free end (19) able to come to bear against the radiator (6), **characterized in that** the lip (17) extends forward from its region (18) of connection to the first part (16), its free end (19) therefore being further forward than the region (18) of connection.

2. Air guide device (10) according to Claim 1, **characterized in that** the region (18) of connection of the device comprises an elastic property performing a function of returning the lip (17).

3. Air guide device (10) according to Claim 1 or 2, **characterized in that** it is in monolithic form made of plastic.

4. Air guide device (10) according to the preceding c claim, **characterized in that** the region (18) of connection takes the form of a region of plastic that is of small thickness so that it has an elastic deformation property.

5. Air guide device (10) according to one of the preceding claims, **characterized in that** the lip (17) is substantially flat and articulated toward its rear end, at the region (18) of connection, positioned toward the rear end of the first part (16).

6. Air guide device (10) according to one of the preceding claims, **characterized in that** it comprises another lip toward its front end.

7. Layout of the front part of a motor vehicle comprising a frontal surface comprising at least one air inlet opening (2; 3; 4), devices (5, 9) for dealing with frontal impacts, and a radiator (6) positioned close by behind this frontal surface, **characterized in that** it comprises an air guide device (10) according to one of the preceding claims arranged between the frontal surface (1) of the motor vehicle and the radiator (6) in order fluid tightly to guide air from the frontal surface (1) of the motor vehicle as far as the radiator (6).

8. Layout of the front part of a motor vehicle according to the preceding claim, **characterized in that** the articulated lip (17) of the air guide device (10) comprises a part that bears against a lateral surface surrounding the radiator.

9. Layout of the front part of a motor vehicle according to the preceding claim, **characterized in that** the lip (17) has mobility in a longitudinal direction (x) about the radiator (6).

10. Layout of the front part of a motor vehicle according to one of Claims 7 to 9, **characterized in that** it comprises at least one lower air inlet opening (2; 3) and at least one upper air inlet opening (4) which are distributed about a cross member (5) at the frontal surface (1) of the motor vehicle.

11. Layout of the front part of a motor vehicle according to one of Claims 7 to 10, **characterized in that** the guide device (10) comprises a free front end (20) .

12. Layout of the front part of a motor vehicle according to one of Claims 7 to 11, **characterized in that** the air guide device (10) extends over the entire periphery of the air inlet openings (2, 3, 4) and of the assembly formed by one or more radiator/s, thus delimiting a closed and fluid tight volume between the frontal surface of the motor vehicle and the radiator/s.

13. Motor vehicle, **characterized in that** it comprises a front part layout according to one of Claims 7 to 12.

14. Method of assembling the front part of a motor vehicle involving a step of fitting at least one radiator (6) in the front part of a motor vehicle, **characterized in that** it then involves a step of fixing an air guide device (10) according to one of Claims 1 to 6 through a backward movement, causing the lips (17) to naturally articulate upon contact with a lateral surface of a radiator (6) in order to achieve the fluid tightness of the air guide from the frontal surface (1) of the vehicle as far as one or more radiator/s (6).
